# EUROPEAN PATENT APPLICATION

(11) **EP 2 056 639 A2**
(43) Date of publication of application: **06.05.2009**
(21) Application number: 08275067.0
(22) Date of filing: 03.11.2008
(51) Int. Cl.: H04W 36/14

(54) **Handover in telecommunications networks**

(30) Priority: 03.11.2007 GB 0721579; 01.05.2008 GB 0807959
(71) Applicant: Vodafone Group PLC, Newbury Berkshire RG14 2FN (GB)
(72) Inventor: Golaup, Assen, Hounslow, Middlesex TW3 2PJ (GB); Patanapongpibul, Leo, Weybridge, Surrey KT13 8JU (GB)
(74) Representative: Keston, David Arthur

(57) **Abstract**

Performing inter-RAT cell handover of radio access terminals in a multi-RAT network environment comprised of a plurality of RAT networks is expected to become more complicated with the increased number of different available RATs (GSM, UMTS, LTE, WiMAX, CDMA2000, etc.). A radio access terminal camping on a serving cell in a first RAT network and requiring handover to a different RAT must initiate a series of cell selection parameter measurements. By ensuring that measurements are performed in a predetermined order and by initiating handover to a cell for which the value of cell selection parameter exceeds an adequacy threshold value, the time taken for performing sufficient measurements can be reduced by comparison with conventional techniques. As a result the number of failed inter-RAT handovers can be reduced.

## Description

### Field of the Invention

The present invention relates to a method and system for facilitating cell selection, cell reselection, cell change order and/or handover of a mobile terminal between digital cellular networks having heterogeneous Radio Access Technologies (RATs).

### Background

The term handover or handoff is often used to indicate a time critical procedure for switching an active mobile terminal's serving cell, whilst cell selection, cell reselection and cell change order are often used to refer to equivalent non-time critical procedures for mobile terminals in an idle or stand-by mode. Whilst the present invention is particularly applicable to time critical procedures, it is also relevant to non-time critical procedures. Therefore, whilst the specification and claims will be mainly described in relation to time critical procedures, it is to be appreciated that the expression "handover" is not be considered as limited to the time critical meaning, and will be used in this specification to refer to all procedures where the mobile terminal is passed to a different cell from which to send/receive network communications.

In currently deployed cellular networks there are typically two different RATs: a second generation (2G) design following the GSM radio access standards and a third generation (3G) design following UMTS Terrestrial Radio Access Network (UTRAN) design.

With the existing UTRAN design, an explicit GSM Neighbour Cell List (NCL) is sent in UTRAN System Information (SI) broadcast messages to assist in the cell selection/reselection and handover procedure from UTRAN to GSM. In the UTRAN approach, a NCL is provided for each RAT with each list populated with all the neighbouring cells, which can number up to 32, for the UE (user equipment: i.e. the user's mobile terminal/handset) to measure.

A UE in idle mode (i.e. when UE does not have dedicated resources allocated to it), may be camped in its serving cell, and be receiving the SI messages broadcast by the serving cell. In this example, the serving cell will be described as a UTRAN one.

The broadcast system information includes the NCL as well as trigger information for the UE in relation to switching to an alternative RAT. This trigger information is typically a signal quality threshold value for the serving frequency layer or RAT. The UE will therefore make measurements on the UE's current frequency layer or RAT (i.e UMTS), and thereby determine if the signal quality of the serving cell falls below the signal quality threshold value. This signal quality threshold value is used in the inter-RAT measurement rules to trigger a requirement for measurements to be made on alternative RATs, in this example being GSM. It is worth noting that the signal quality threshold value is unique to each RAT and the values are typically defined by the network operator.

Once measurements of the alternative RAT are triggered, the UE is expected to measure all GSM cells indicated on the NCL, as well as the UMTS cells on the NCL, and to rank the cells for each RAT to determine the best cell to which the UE should reselect or handover. The criterion for being "best" might typically be to have the highest average signal strength.

The UE typically sends the measurement results for the neighbouring UMTS and GSM cell as a report to the network. The network will then analyse the measurement results and decide whether a switch from UTRAN to GSM is desirable.

In active mode (with dedicated resources allocated to the UE), the network will send the NCL on a dedicated channel indicating to the UE the neighbouring cells for each RAT or frequency layer that it should measure. The UE makes measurements requested on all the cells indicated in the NCL for each frequency layer/RAT. If certain measurement report criteria are met the UE will report the measurement results to the network which can then trigger a handover to another cell belonging to the same frequency layer, a different frequency layer and even a different RAT.

It is contemplated that in the future, as the number of RAT designs proliferate: handover between different RATs will become even more complicated. In particular, the long term evolution (LTE) of the UTRAN design (so-called E-UTRAN or "evolved" UTRAN) is expected to operate in parallel with existing 3G and 2G RATs.

If the existing UTRAN approach to measurement before handover is adopted in E-UTRAN, handover will incur a potentially disruptive overhead in terms of measurement time. Consider for instance handover from E-UTRAN to another available RAT: this will require measurements to be made on each RAT (e.g. UTRAN and GSM) before the optimal (e.g. UTRAN or GSM) cell can be selected and handover can be implemented.

While this situation can be problematic in legacy systems, where there is only one possible RAT to transfer to (e.g. to GSM RAT, with UMTS as the serving RAT), the problem would be exacerbated if there are to be more than two Radio Access Technologies (RATs) to be supported by the network and the UE (i.e. in the "multi-RAT" network environment). For instance, examples of the various RATs that may be available to a UE in a given area include GSM, UMTS, LTE, WiMAX and CDMA2000.

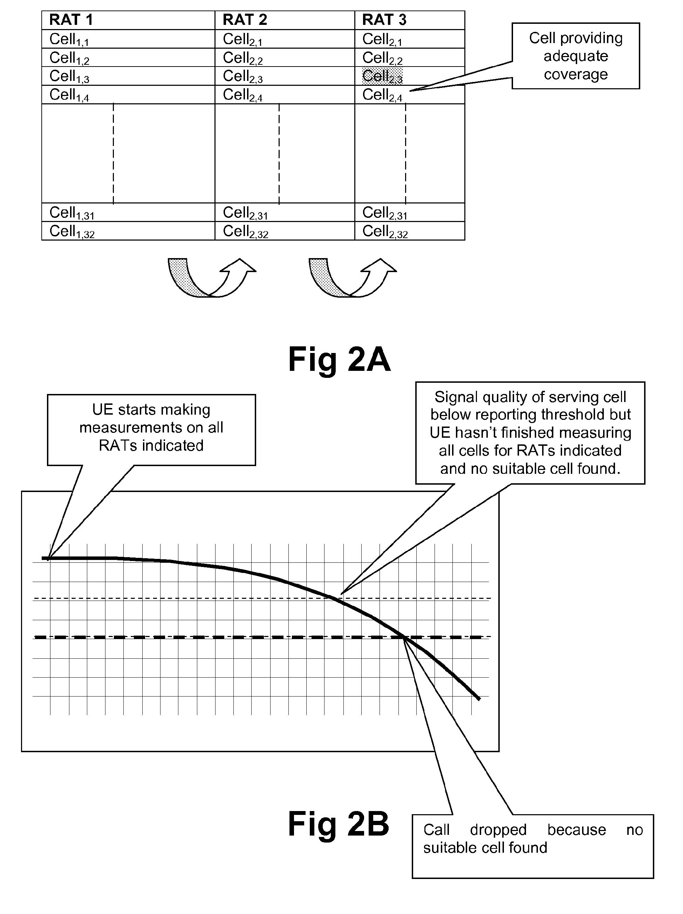

Where there are multiple RATs for the UE to monitor, the time taken by the UE in making measurements of all the applicable cells will be increased. More particularly, in the situation where the measurement trigger criteria are met for all the RATs, measurements for multiple RATs would be triggered in parallel. In this situation, the processing burden on the UE would be extremely high, and accordingly the possibility that the UE will fail to find a suitable cell to handover to before the signal quality of the serving cell degrades to the point where the call is dropped (see Figure 2B) is also increased.

In this regard Figure 2B illustrates a graph of signal level against time, with a predetermined signal quality threshold marked in as a dashed line, as well as a lower call drop out level marked in as an emboldened dashed line. The UE's signal level is shown as a bold unbroken line. At the start of the graph, the UE's signal level is above both the signal quality threshold and the drop out point. The UE is active and making measurements of all the appropriate neighbouring cells indicated in the NCL, as well as it serving cell.

As time progresses, the UE starts to move away from its serving cell, and the signal level received from its serving cell decreases to the point where the signal quality falls below the reporting threshold, and continues to fall. The UE continues to measure all the cells for all the RATs listed in the NCL, but in this example no suitable cell is found by the time the signal quality falls to the drop out level. The UE's call is therefore dropped because no suitable cell was found.

UE limitations are particularly important in this context. Each UE will typically have a single antenna that needs to be tuned (in a finite time) to a new frequency in order to perform a measurement on a given cell in a given RAT.

In a multi-RAT network environment, the UE may have to make intra-frequency measurements, inter-frequency measurements and measurements on multiple RATs in parallel (e.g. LTE/UMTS/GSM). Such a situation would stretch the UE measurement capability and is likely to delay the time the network takes to switch the UE to the appropriate cell in the chosen RAT (due to UEs taking more time to measure and rank cells for *all* RATs available).

It is therefore an object of the invention to obviate or at least mitigate one or more of the aforementioned problems.

### Summary of the Invention

In accordance with one aspect of the present invention, there is provided a method for performing cell handover of a radio access terminal in a multi-RAT network environment comprised of a plurality of RAT networks, each network including a plurality of cells and the radio access terminal camping on a serving cell in a first of said RAT networks, including: detecting whether a cell selection parameter in the serving cell is below a predetermined handover threshold value; receiving a list indicating in which individual cells of at least one of the RAT networks other than the first RAT network, cell selection parameter measurements are to be made; performing cell selection parameter measurements in at least a proportion of the listed cells if the signal strength in the serving cell is determined to be below the handover threshold value, wherein the cell selection parameter measurements are performed in a predetermined order; and initiating handover to a cell for which the value of cell selection parameter exceeds an adequacy threshold value.

As a result of the performance of the cell parameter measurements in a predetermined order and the subsequent handover to an adequate cell the time taken in making measurements before handover may be significantly reduced. In turn the reduced measurement time corresponds to reduction in failed handovers ("failed" because the user equipment has been unsuccessful in discovering a cell in another RAT to which handover can be effected) and a consequent improvement in user experience.

A further benefit of the invention is a reduction in the average power consumption in achieving a successful inter-RAT handover. This has the effect of increasing battery life.

It is envisaged that the operator of the RATs will use detailed cell planning to determine the appropriate predetermined ordering within the neighbour cell list(s) for the various RATs. However, in a variant of the invention the subscriber may be provided with a facility for selecting or amending the predetermined ordering him- or herself.

In accordance with another aspect of the present invention, there is provided apparatus for performing cell handover of a radio access terminal in a multi-RAT network environment comprised of a plurality of RAT networks, each network including a plurality of cells and the radio access terminal camping on a serving cell in a first of said RAT networks, including: means for detecting whether a cell selection parameter in the serving cell is below a predetermined handover threshold value; means for receiving a list indicating in which individual cells of at least one of the RAT networks other than the first RAT network, cell selection parameter measurements are to be made; measurement means for performing cell selection parameter measurements in at least a proportion of the listed cells if the signal strength in the serving cell is determined to be below the handover threshold value, wherein the cell selection parameter measurements are performed in a predetermined order; and handover means for initiating handover to a cell for which the value of cell selection parameter exceeds an adequacy threshold value.

### Brief Description of the Drawings

For a better understanding of the present invention, reference will now be made, by way of example only, to the accompanying drawings in which:-
Figure 1 illustrates an example of a network in which the embodiments of the invention may be implemented2
Figure 2A illustrates a first solution to the problem of minimising measurement times in Inter-RAT handover;
Figure 2B illustrates the handover failure resulting from the inability for the UE to identify a suitable cell to handover to before the signal quality degrades to the point where the call is dropped;
Figure 3 shows a table illustrative of RAT-centric neighbour cell priority ordering;
Figure 4 shows an illustrative instance of a combined NCL table in accordance with an embodiment of the invention; and
Figure 5 illustrates a situation where a combined NCL as indicated in Figure 4 is appropriate.

### Detailed Description

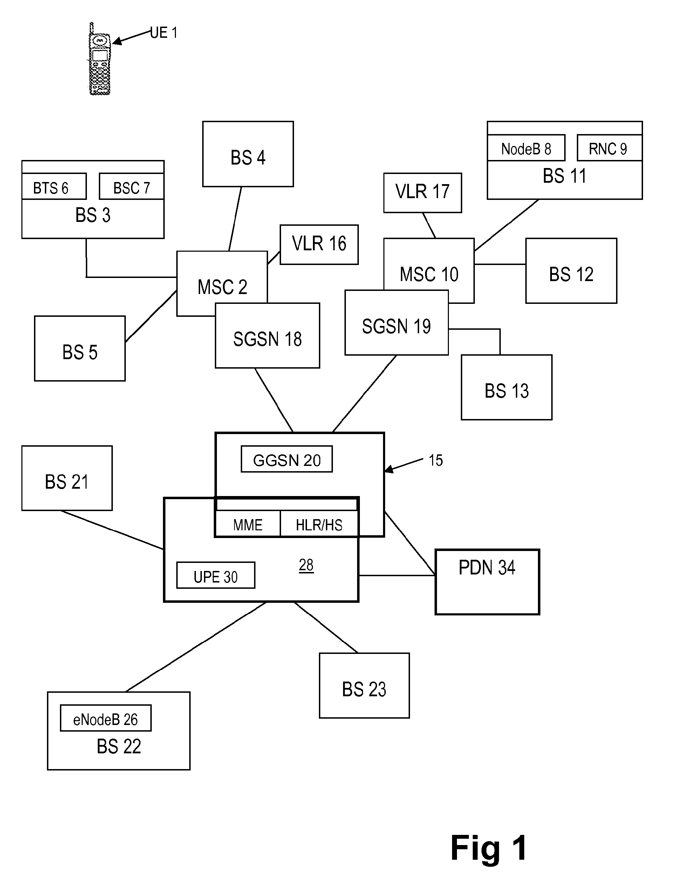

Key elements of a mobile telecommunications network, and its operation, will now briefly be described with reference to Figure 1.

Each base station (BS) corresponds to a respective cell of its cellular or mobile telecommunications network and receives calls/data from and transmits calls/data to a mobile terminal in that cell by wireless radio communication in one or both of the circuit switched or packet switched domains. Such a subscriber's mobile terminal (or User Equipment-UE) is shown at 1. The mobile terminal may be a handheld mobile telephone, a personal digital assistance (PDA), a laptop computer equipped with a datacard, or a laptop computer with an embedded chipset containing the UE's functionality.

In a GSM (2G) mobile telecommunications network, each base station subsystem 3 comprises a base transceiver station (BTS) 6 and a base station controller (BSC) 7. A BSC may control more than one BTS. The BTSs and BSCs comprise the radio access network.

In a UMTS (3G) mobile telecommunications network, a radio network controller (RNC) 9 may control more than one node B 8. The node B's and RNC's comprise the radio access network.

Conventionally, the base stations are arranged in groups and each group of base stations is controlled by one mobile switching centre (MSC), such as MSC 2 for base stations 3, 4 and 5. As shown in Figure 1, the network has another MSC 10, which is controlling a further three base stations 11, 12 and 13. In practice, the network will incorporate many more MSCs and base stations than shown in Figure 1.

Each subscriber to the network is provided with a smart card or SIM which, when associated with the user's mobile terminal identifies the subscriber to the network. The SIM card is pre-programmed with a unique identification number, the "International Mobile Subscriber Identity" (IMSI) which is not visible on the card and is not known to the subscriber. The subscriber is issued with a publicly known number, that is, the subscriber's telephone number, by means of which calls to the subscriber are initiated by callers. This number is the MSISDN.

The network includes a home location register (HLR)/home subscriber server (HSS) 14 which, for each subscriber to the network, stores the IMSI and the corresponding MSISDN together with other subscriber data, such as the current or last known location of the subscriber's mobile terminal. The HSS is the master database for the network, and while logically it is viewed as one entity, in practice it will be made up of several physical databases. The HSS holds variables and identities for the support, establishment and maintenance of calls and sessions made by subscribers.

When the subscriber wishes to activate their mobile terminal in a network (so that it may make or receive calls subsequently), the subscriber places their SIM card in a card reader associated with the mobile terminal (terminal 1 in this example). The mobile terminal 1 then transmits the IMSI (read from the card) to the base station 3 associated with the particular cell in which the terminal 1 is located. In a traditional network, the base station 3 then transmits this IMSI to the MSC 2 with which the BS 3 is registered. In a network using the functionality described in 3GPP TS 23.236, the base station follows prescribed rules to select which MSC to use, and then transmits this IMSI to the selected MSC.

MSC 2 now accesses the appropriate location in the HLR/HSS 14 present in the network core (CN) 15 and extracts the corresponding subscriber MSISDN and other subscriber data from the appropriate storage location, and stores it temporarily in a location in a visitor location register (VLR) 16. In this way, therefore the particular subscriber is effectively registered with a particular MSC (MSC 2), and the subscriber's information is temporarily stored in the VLR (VLR 16) associated with that MSC. The information stored on the VLR 16 includes a Temporary Mobile Subscriber Identification (TMSI) number for identification purposes for the terminal within the MSC 2. In conventional systems, the TMSI number is not allocated to more than one subscriber of a given system served by that MSC at any one time. Consequently, the TMSI number is usually invalidated when the mobile station crosses into a new location served by a different MSC.

When the HLR 10 is interrogated by the MSC 2 in the manner described above, the HLR 14 additionally performs an authentication procedure for the mobile terminal 1. The HLR 14 transmits authentication data to the MSC 2 in "challenge" and "response" forms. Using this data, MSC 2 passes a "challenge" to the mobile terminal 1 through base station 3. Upon receipt of this data, the mobile terminal 1 passes this data to its SIM and produces a "response". This response is generated using an encryption algorithm on the SIM and a unique Ki on the SIM. If the response from the mobile terminal 1 is as expected, the mobile terminal 1 is deemed authenticated. At this point the MSC 2 requests subscription data from the HLR 14. The HLR 14 then passes the subscription data to the VLR 16.

Each of the MSCs of the network (MSC 2 and MSC 10) has a respective VLR (16 and 17) associated with it and operates in the same way as already described when a subscriber activates a mobile terminal in one of the cells corresponding to one of the base stations controlled by that MSC.

When the subscriber using mobile terminal 1 wishes to make a call, having already inserted the SIM card into the reader associated with this mobile terminal and the SIM has been authenticated in the manner described, a call may be made by entering the telephone number of the called party in the usual way. This information is received by the base station 3 and passed on to the MSC 2. The MSC 2 routes the calls towards the called party via the MSC 2. By means of the information held in the VLR 16, MSC 2 can associate the call with a particular subscriber and thus record information for charging purposes.

The MSCs 2 and 10 support communications in the circuit switched domain - typically voice calls. Corresponding SGSNs 18 and 19 are provided to support communications in the packet switched domain - such as GPRS data transmissions. The SGSNs 18 and 19 function in an analogous way to the MSCs 2 and 10. The SGSNs 18, 19 are equipped with an equivalent to the VLR for the packet switched domain. GGSN 20 provides IP connectivity for the CN 15.

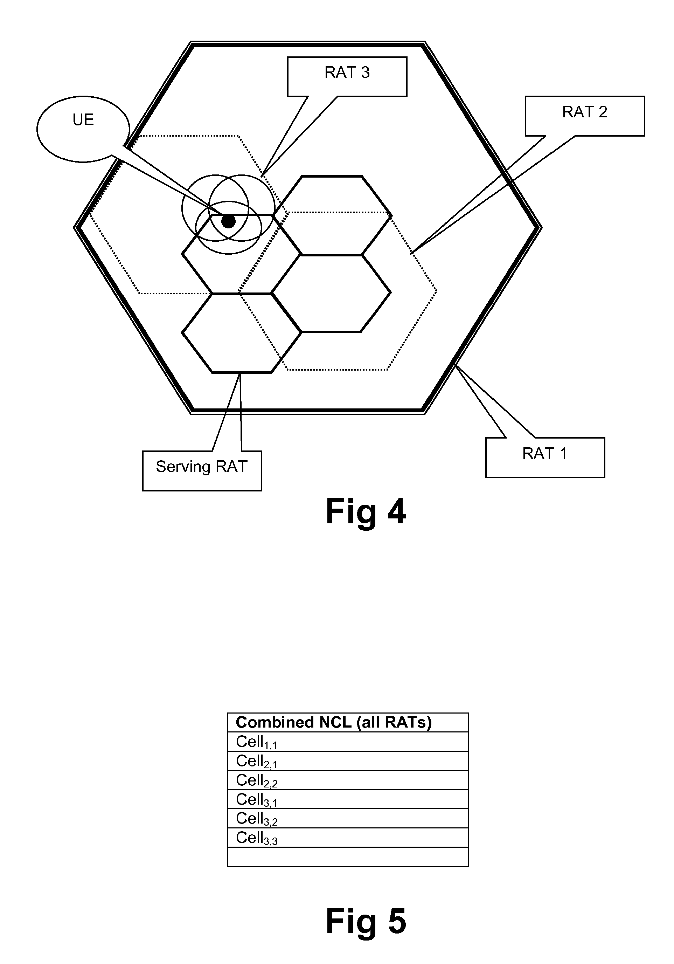

Elements of an LTE network are also shown in Figure 5. The base stations 21, 22 and 23 include an eNodeB (evolved Node B) 26. The RRC signalling with the mobile terminal 1 terminates at the eNode B 26, the eNode B comprising the RAN of the LTE network. The eNode B 26 performs the functions of both the Node B and a large part of the RNC of the 3G/UMTS network. The network core 28 of the LTE network includes User Plane Entity (UPE) 30, the HLR/HSS 14 (a common HLR/HSS shared with the network core 15 of the GSM/UMTS network) and also Mobility Management Entity (MME) 32 (also shared with the network core 15 of the GSM/UMTS network). A plurality of UPEs are usually provided, although only one is shown.

Although shown separately in Figure 1, the UPE 30 and GGSN 20 may be combined to form a single element. For the purposes of this document, UPE 30 and GGSN 20 are considered to be a common element with one interface to Packet Data Network (PDN) 34 (for example, the Internet).

From the description above, it will be understood that the coverage area of a mobile telecommunications network is divided into a plurality of cells, each of which is served by a respective base station. As shown in Figure 4, multiple RATs may be available to service a UE in a particular area. In this example, cells of four different RATs are illustrated, with, for instance, the serving RAT being CDMA2000, RAT 1 being GSM, RAT 2 being UTRAN and RAT 3 being LTE.

In order to allow a mobile terminal to maintain a call when the mobile terminal moves outside the coverage area of a serving cell, the call must be switched to an alternative cell automatically. The call must be routed to the new cell before handover can be effected whilst maintaining the connection with the old cell until the new connection is known to have succeeded. As is evident from Figure 2B, Handover is a time critical process requiring action to be taken before the radio link with the original cell degrades to such an extent that the call is lost. Handover requires synchronisation of events between the mobile terminal and the network.

Figure 2A illustrates one approach to solve the inter-RAT switching problem set out above. In this approach, the UE is provided with an absolute priority list of RATs to which it is allowed to reselect or handover.

In the simplest implementation, the UE is provided with a RAT priority list (i.e. the most preferable RAT is designated RAT 1 at the head of the list, then RAT 2, RAT 3 etc) and, for each RAT, a neighbour cell list (NCL) of up to 32 cells is provided for the UE to measure (i.e. the cells of RAT 1 are Cell_{1,1} up to Cell_{1,32} and for RAT 2 the cells are Cell_{2,1} up to Cell_{2,32} and for RAT 3 the cells are Cell_{3,1} up to Cell_{3,32}).

When the quality of the UE's serving cell (i.e. the average signal strength in that cell) falls below a certain threshold, the UE would first of all measure all cells indicated in the NCL of the highest priority RAT (i.e. RAT 1), rank them and try to identify the best cell for the RAT indicated and reselect/handover to the RAT on the best cell. This "best cell" is typically one for which UE is receiving highest signal strength. Generally, to make sure UE detects a "best cell", the UE measures *all* cells in list. However, if the UE measures a subset of the available cells, it will still report the 'best cell' (from UE point of view) among the selected subset but that 'best cell' might not be the best cell in the RAT (from the system point of view) for that UE. Covering a subset of cells implicitly accepts this fact and replaces a requirement for an absolute 'best cell' with a requirement for a "locally" best cell: in other words, the requirement is that an 'adequacy' threshold being met. If the highest priority RAT cannot provide a suitable cell for the UE, it can then measure the next RAT down in the priority RAT list (i.e. RAT 2) to find the best cell and so on.

This solution eliminates the need for the UE to measure several RATs in parallel by prioritising each of the RATs. This prioritisation would typically be performed by the network operators, and would allow them informatively to decide the prioritisation, such as based on actual cell coverage areas, so that preferably a suitable cell is located as quickly as possible.

While this approach is a good general solution, the effectiveness of the technique can be diminished as the measurement time to determine the best cell for the UE to reselect/handover could be increased as the number of RATs increase. For instance in the Figure 2A example, the first cell providing adequate coverage is Cell _{2,3}, so the UE would need to measure and rank the cells of RAT 1, RAT 2 and RAT 3 before identifying this cell as an adequate handover candidate. While effective prioritisation could reduce the risk of this happening, this is not a failsafe solution.

The first approach is based on the idea that the UE always has to reselect/handover to the best cell in the target RAT. In cases where multiple RATs are supported by the network and UE, such a requirement will certainly increase the time for the UE to determine the target cell it should reselect/handover to. This delay is especially troublesome for a UE in active mode rapidly losing coverage in the serving cell/RAT and hence needs to handover to a new cell in another RAT.

Therefore, according to a first embodiment of the present invention, in order to reduce the measurement time and increase the effectiveness of cell reselection/handover, rather than undertaking cell measurements in order to determine the best cell in a RAT to handover to, cell measurements are only undertaken until an adequate cell is located.

This first embodiment of the invention may be utilised with any NCL from which the best cell would normally be sought. According to this embodiment, however, the list of cells need only be measured sequentially (or according to another predetermined order) until a suitable cell is located; the entire list of cells for a given RAT need not be measured and ranked. A suitable cell could be any cell that provides the UE with a minimum or "adequacy" signal quality level. This adequacy level may be substantially equal to the handover threshold value for the corresponding RAT network, or an entirely different value.

Once such an "adequate" cell is located, the UE can be switched over to that cell, such as by the UE performing a cell reselection or requesting handover to the cell.

Importantly, once the UE has been handed over to an adequate cell in another RAT, it can then be handed over to the best cell in that RAT, if need be.

This technique may therefore effectively provide a buffer or intermediate position, wherein the UE is handed over to an adequate cell in a shorter period of time, thereby preventing a UE from dropping out, which is particularly disadvantageous for active UEs engaged in a call. Once the UE has been switched over to an adequate cell, the UE's connection will generally been stabilised, and the UE has more time to find the best cell in that RAT to be handed over to, if necessary and applicable.

According to a second embodiment of the present invention, in order to further reduce the measurement time and increase the effectiveness of cell reselection/handover, only a subset of the cells indicated in the explicit NCL of each RAT is used to find a target cell for the UE. This solution relies on the principle of the invention embodiment just described, being that the UE does not need to reselect to the best cell as long as it is able to find an 'adequate' cell. Once the UE has been handed over to another RAT, it can then be handed over to the best cell if need be.

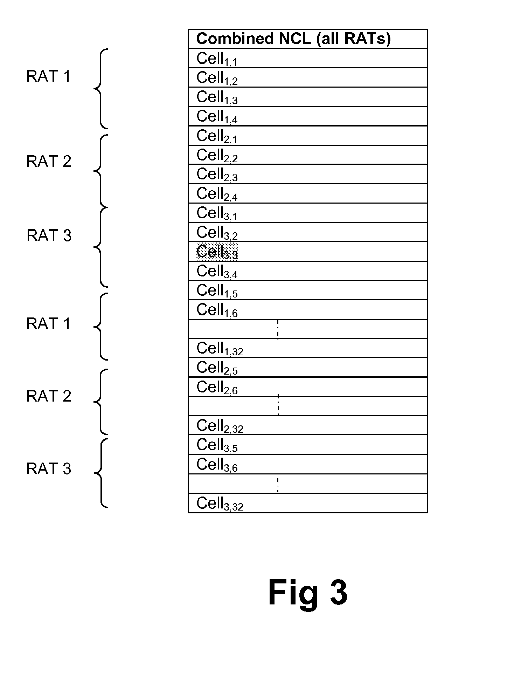

Therefore, in this second embodiment of the invention, the UE is thus provided with a combined NCL indicating subset of cells for all RATs which the UE should measure in the order of preference. Figure 3 and 5 illustrate examples of the concept.

With the solution proposed here, the network operator can assist the UE in deciding the cells it should measure in order of RAT-independent neighbour cell preference.

In Figure 3, there are three possible RATs that the UE can hand over to. The NCL has prioritised each of the RATs, with RAT 1 being the most preferable RAT, and RAT 3 being the least preferable. The NCL is headed by a first subset of cells for each of the RATs. For instance, a subset of RAT 1's most preferable cells are firstly listed, being Cell_{1,1} to Cell_{1,4}. A subset of RAT 2's cells are then listed, being Cell_{2,1} to Cell_{2,4}, and finally a subset of RAT 3's cells are listed, being Cell_{3,1} to Cell_{3,4}. Further subsets for all of the RATs may then be listed, in any appropriate order. In Figure 3, however, the first set of subsets for each of the RATs is followed by the remainder of cells for each of the RATs, for RAT 1 to RAT 3 consecutively.

Preferably the Combined NCL will list all of the cells of each of the RATs. It is also to be appreciated that the subsets may be of any size, and may also vary in number from subset to subset as well as between RATs. For instance, the first subset for RAT 1 may have 4 cells, whilst the first subset for RAT 2 may have 5 cells. In turn, a second subset for RAT 1 may have 3 cells.

In operation, the UE will measure the signal strength of each cell in the list in turn until a cell of adequate signal strength is located. If the UE is unable to detect an adequate cell from, say, cell(1,1), to cell(1,4), then it can move straight to the next RAT and look for an adequate cell and so on. In this example, the UE would detect adequate Cell (3,3) from RAT 3 only after measuring 11 cells. This is to be compared with the 66 cells which needed to be measured using the prioritised RAT approach described above. By proper planning, in this second embodiment of the invention the UE will detect the best cell, or at least a suitable cell, for the first priority RAT indicated by measuring only a few cells and hence this would have saved UE vital measurement time and UE battery power.

To illustrate how proper planning can improve the effectiveness of this embodiment of the invention, in Figure 4, a UE is shown at the border of a serving cell of its serving RAT. The serving RAT has four cells, and the UE is at the edge of its serving cell, with no other cells from the serving RAT nearby. At this position, it is likely that the signal level from the serving cell will be at or below the signal level threshold, and so it would be desirable for the UE to switch to a RAT with at least an adequate level of coverage. In the UE's current position, there are three other RATs which could provide the UE with coverage. In the Figure 4 example, the cells of each RAT having a different size and coverage level. In terms of the cells of these other RATs to which the UE could realistically switch to, it would be sufficient to designate just one cell of RAT 1 (indicated in Figure 4 by the large emboldened hexagon), two cells of RAT 2 (indicated by the dotted hexagons) and three cells of RAT 3 (indicated by the three unbroken circles).

A corresponding combined NCL that could be created from this situation is shown in Figure 5. The one cell of RAT 1, Cell (1,1), is top of the list, followed by the two cells of RAT 2 being Cell (2,1) and Cell (2,2) and then by the three cells of RAT 3, Cells (3,1) to (3,3). This combined NCL allows the flexibility for the network operator, not only to prioritise RATs but also prioritise cells which UE should measure.

It is noted that the term measurement used in this document is not to be taken as being limited to the performance of a single sample of a given cell selection parameter (e.g. signal strength, attenuation level etc.). More typically each "measurement" comprises an aggregation of five to ten samples for each cell.

A further factor which acts to limit the time available for measurements when the user equipment is in active mode is the degree to which a call is degraded as a result of simultaneous measurements. In UTRAN, for instance, if compressed mode is not required, a measurement period of 480 ms is specified in 3GPP TS 25.133 to measure GSM. For each period, a very limited measurement gap is permitted.

In the unlikely case that the UE cannot identify an adequate cell from the subset indicated, it can have the option to fall-back to the legacy mechanism of measuring all cells for a particular RAT in an attempt to determine the best cell.

There are of course many other possible cellular network RATs (3GPP and non-3GPP) to which (or from which) inter-RAT handover may be necessary and to which the present invention applies. Examples of such RATs include: WiFi; GSM; 3G/UMTS; CDMA2000; LTE; WiMAX and other "fourth generation" cellular technologies; TETRA and/or other dedicated cellular networks.

While the techniques above are discussed in terms of E-UTRAN specifically, the invention may be applied equally to handover between any digital cellular RATs, as the skilled person will readily appreciate.

## Claims

1. A method for performing cell handover of a radio access terminal in a multi-RAT network environment comprised of a plurality of RAT networks, each network including a plurality of cells and the radio access terminal camping on a serving cell in a first of said RAT networks, including:
detecting whether a cell selection parameter in the serving cell is below a predetermined handover threshold value;
receiving a list indicating in which individual cells, of at least one of the RAT networks other than the first RAT network, cell selection parameter measurements are to be made;
performing cell selection parameter measurements in at least a proportion of the listed cells if the signal strength in the serving cell is determined to be below the handover threshold value, wherein the cell selection parameter measurements are performed in a predetermined order; and
initiating handover to a cell for which the value of cell selection parameter exceeds an adequacy threshold value.

2. The method of Claim 1 wherein the cell selection parameter measurements are performed until a listed cell is located for which the value of its cell selection parameter exceeds an adequacy threshold.

3. A method according to Claim 1 or 2, wherein the cell selection parameter is the signal strength in the cell.

4. A method according to any one of Claims 1 to 3, wherein the adequacy threshold value is substantially equal to a handover threshold value for the corresponding RAT network.

5. A method according to any one of Claims 1 to 4 further including:
once handover to the cell having a cell selection parameter exceeding the adequacy threshold has been completed, continuing to perform cell selection parameter measurements in order to determine the best cell to be the radio access terminal's serving cell.

6. A method according to Claim 5 further including performing handover to the best cell, where the best cell is not already the current serving cell.

7. A method according to any one of Claims 1 to 6 wherein the list received by the radio access terminal indicating in which individual cells, in at least one of the RAT networks other than the first RAT network, cell selection parameter measurements are to be made, indicates the individual cells in one or more cell subsets for each of the at least one other RAT networks.

8. Apparatus for performing cell handover of a radio access terminal in a multi-RAT network environment comprised of a plurality of RAT networks, each network including a plurality of cells and the radio access terminal camping on a serving cell in a first of said RAT networks, including:
means configured for detecting whether a cell selection parameter in the serving cell is below a predetermined handover threshold value;
means configured for receiving a list indicating in which individual cells of at least one of the RAT networks other than the first RAT network, cell selection parameter measurements are to be made;
measurement means configured for performing cell selection parameter measurements in at least a proportion of the listed cells if the signal strength in the serving cell is determined to be below the handover threshold value, wherein the cell selection parameter measurements are performed in a predetermined order; and
handover means configured for initiating handover to a cell for which the value of cell selection parameter exceeds an adequacy threshold value.

9. Apparatus according to claim 8 wherein the measurement means is further configured to perform the cell selection parameter measurements until a listed cell is located for which the value of its cell selection parameter exceeds an adequacy threshold.

10. Apparatus according to Claim 8 or 9, wherein the cell selection parameter measurements that the measurement means is configured to perform are cell signal strength measurements.

11. Apparatus according to any one of Claims 8 to 10, wherein, once handover to the cell having a cell selection parameter exceeding the adequacy threshold has been completed, the measurement means is configured to continue performing cell selection parameter measurements in order to determine the best cell to be the radio access terminal's serving cell.

12. Apparatus according to Claim 11 wherein once the measurement means has determined the best cell and the best cell is not already the current serving cell, the handover means is further configured to performing handover to the best cell.
